# FASCICULE DE BREVET EUROPEEN

(11) **EP 2 284 069 B1**
(45) Date de publication et mention de la délivrance du brevet: **27.11.2013**
(21) Numéro de dépôt: 10170994.7
(22) Date de dépôt: 28.07.2010
(51) Int. Cl.: B62J 6/00, B62J 6/02, B62J 6/04, B62J 37/00

(54) **Dispositif de signalisation pour cyclistes et cyclomotoristes**
Vorrichtung zur Signalisierung eines Fahrrad- oder Motorradfahrers
Device of signalisation of a driver of a bicycle or motorbike

(30) Priorité: 13.08.2009 FR 0955662
(43) Date de publication de la demande: 16.02.2011
(73) Titulaire: Remy, Vincent, 92130 Issy Les Moulineaux (FR)
(72) Inventeur: Remy, Vincent, 92130 Issy Les Moulineaux (FR)
(74) Mandataire: Remy, Vincent Noel Paul

(56) Documents cités:
- FR-A- 1 053 465
- GB-A- 506 414
- US-A1- 2006 158 890

## Description

La présente invention concerne le domaine de la sécurité routière, et plus particulièrement la sécurité des cycliste et des cyclomotoristes.

Dans la suite, le terme « cycliste » s'entend comme désignant toute personne circulant sur un vélo, avec ou sans moteur, sur un cyclomoteur ou sur une motocyclette, véhicules qui sont également désignés « deux roues » (même s'il peuvent quelque fois comporter plus de deux roues). Il s'agit en toute hypothèse de véhicules de largeur réduite.

Il est bien connu que les cyclistes sont exposés au risque de d'être ignorés dans un flot de circulation, quelques fois parce qu'ils sont méprisés par les automobilistes, mais le plus souvent parce qu'ils sont mal vus par ces derniers.

Une des circonstances les plus répandues d'accidents de la circulation mettant en scène des cyclistes est le franchissement d'un carrefour : Un cycliste remonte une file de voitures arrêtées à sa propre allure. Un automobiliste souhaitant tourner à droite croit que la voie latérale utilisée par les cyclistes est toujours libre car il l'a vue libre lorsqu'il s'est placé sur la chaussée en prévision de son virage. Dès qu'il peut avancer, l'automobiliste tourne en coupant la voie des cyclistes, sans l'avoir vérifiée visuellement, et renverse le cycliste. Dans une autre hypothèse malheureusement fréquente, l'automobiliste n'a même pas imaginé qu'un cycliste pouvait se trouver sur son chemin.

Le document FR1053465 divulgue, en accord avec le préambule de la revendication 1, un dispositif permettant d'éclairer les cyclistes pour les rendre davantage visibles pour les automobilistes qui les suivent, comprenant une lampe projetant un faisceau lumineux sur une zone du sol immédiatement située à côté ou derrière la bicyclette. Le document US2006/0158890 divulgue un système d'éclairage de bicyclette utilisant des tubes néon pour éclairer le sol sous la bicyclette, à partir de son cadre. Le document GB506414 divulgue une lampe de bicyclette permettant d'envoyer un premier faisceau lumineux vers l'avant de la bicyclette et un second faisceau vers l'arrière, sur le sol.

La présente invention vise à proposer un dispositif de signalisation qui réduit le risque qu'un cycliste soit ignoré par le conducteur d'un véhicule automobile.

L'invention a pour objet un dispositif de signalisation pour cyclistes ou cyclomotoristes, caractérisé en ce qu'il est constitué par une source lumineuse agencée pour, en conditions normales d'utilisation par un cycliste, projeter vers le bas une image caractéristique matérialisant la présence du cycliste à une distance de sécurité de sa position réelle.

De préférence, l'image caractéristique projetée délimite sur la chaussée une zone plus grande que et englobant la place réellement occupée par le cycliste, pour matérialiser la distance de sécurité que les automobiles sont censées laisser autour de lui.

Mais, selon l'invention, l'image caractéristique peut aussi occuper une zone plus petite que la place réelle du cycliste, à condition de se trouver à une distance de sécurité de sa position réelle. Ainsi, l'image caractéristique peut être projetée à quelques mètres en avant du cycliste, pour annoncer sa présence aux automobilistes.

L'invention permet d'éviter que les automobilistes ne coupent la voie des cyclistes par ignorance. En effet, grâce à l'invention, l'image caractéristique projetée vers le bas se trouve dans le champ d'observation d'un automobiliste qui négocie son virage, sans qu'il ait besoin de regarder dans son rétroviseur. De plus, l'image caractéristique étant projetée vers le bas, si l'automobiliste se trouve trop près du cycliste pour voir la chaussée en avant du cycliste, l'image caractéristique se forme sur le capot du véhicule, ce qui la rend encore plus visible par l'automobiliste.

Ainsi, selon l'invention, la source lumineuse est agencée pour que l'image se forme soit sur la chaussée, soit sur un capot d'une automobile roulant très près du cycliste. En d'autres termes, il faut que la source lumineuse soit positionnée au-dessus du capot d'une automobile, ce qui correspond à une hauteur moyenne d'environ 80 cm.

Au sens de l'invention, on entend par source lumineuse tout moyen permettant de produire de la lumière. Ce moyen peut être constitué par un ensemble de plusieurs sources lumineuses élémentaires, par exemple un ensemble de diodes électroluminescentes (également désignées par l'acronyme anglais LED). La source lumineuse peut aussi être constituée par un laser ou un ensemble de lasers.

Au sens de l'invention, l'image caractéristique est une image reconnaissable, se distinguant d'une simple tache lumineuse formée par exemple par un feu avant dont la fonction est de rendre un cycliste visible de nuit et/ou d'éclairer une partie de la chaussée pour le cycliste circulant dans le noir. Une telle tache lumineuse ne serait pas une image caractéristique de la présence d'un cycliste. L'image peut être rendue caractéristique de la présence d'un cycliste par sa forme et/ou par sa couleur.

Il est avantageux, selon l'invention, que l'image caractéristique puisse être nettement délimitée quelle que soit surface sur laquelle elle est projetée, pour améliorer la visibilité du cycliste.

Dans un mode de réalisation particulier de l'invention, le dispositif comprend un support qui peut être porté sur la tête par un cycliste ou un cyclomotoriste et la source lumineuse est montée sur ce support. Le support peut être un couvre-chef, tel que, de façon non limitative, un casque de protection, un chapeau, une casquette, ou un bandeau, ou encore une paire de lunettes.

La position élevée d'un tel support est avantageuse en ce qu'elle facilite la projection de l'image de haut en bas et sur le capot d'une automobile roulant très près du cycliste.

Dans un autre mode de réalisation, le support est monté sur le véhicule utilisé par le cycliste ou le cyclomotoriste, c'est-à-dire sur le vélo ou le cyclomoteur. Il peut être fixé par exemple sur un guidon, sur un rétroviseur, sur un pare-brise ou, de manière plus générale, sur un organe situé aussi haut que possible sur le véhicule, pour faciliter la projection de l'image caractéristique vers le bas.

Afin de faciliter la compréhension de l'invention, on va maintenant en décrire des modes de réalisation fournis à titre d'exemples non limitatifs de la portée de l'invention, en référence aux dessins annexés dans lesquels :
- la figure 1 représente, en vue de dessus, un cycliste sur son vélo et une automobile, roulant sur une route,
- la figure 2 est analogue à la figure et montre le cycliste et l'automobile dans une situation différente,
- la figure 3 est une vue en élévation d'un casque de protection selon l'invention,
- la figure 4 est une vue analogue à la figure 3 d'un autre mode de réalisation de casque de protection,
- la figure 5 est une vue de dessus d'un cycliste portant le casque de la figure 4,
- la figure 6 est une vue en élévation d'une paire de lunettes selon l'invention,
- la figure 7 est une vue de dessus d'un cycliste portant la paire de lunettes de la figure 6.

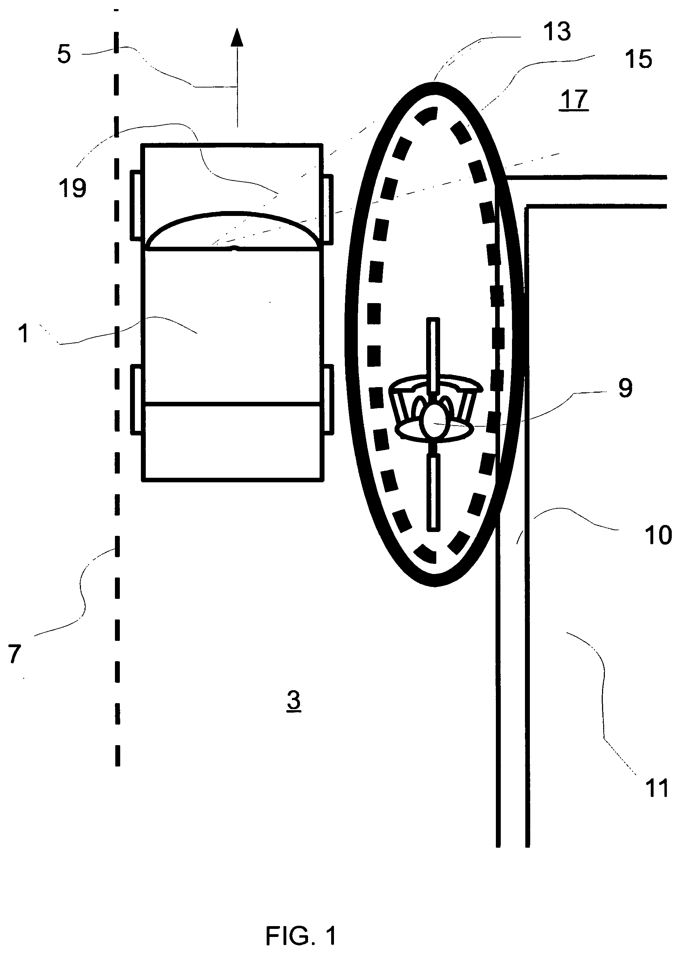

Sur la figure 1, une automobile 1 se déplace sur une voie de circulation 3 dans la direction indiquée par une flèche 5.

La chaussée est séparée en deux voies de circulation par une ligne discontinue 7.

Un cycliste 9 roule sur la même voie 3, tout en demeurant près du bord 10 d'un trottoir 11 pour laisser passer les automobiles, plus rapides que lui.

Le cycliste 9 est équipé d'un dispositif de signalisation selon l'invention, qui projette sur la chaussée une image caractéristique 13, 15 constituée par deux ellipses concentriques. Cette image caractéristique 13, 15 matérialise la présence du cycliste sur la chaussée, à une distance de sécurité de sa position réelle.

Ainsi, le cycliste est entouré d'une image caractéristique qui lui confère visuellement un encombrement virtuel supérieur à son encombrement réel.

L'automobiliste, en dépassant le cycliste, est incité à respecter ce périmètre de sécurité matérialisé par l'image caractéristique 13, 15 projetée sur la chaussée.

En outre, si l'automobiliste souhaite tourner à droite dans la voie 17, il est prévenu de la présence du cycliste par l'image caractéristique 13, 15 qui le précède et qui entre dans le champ de vision 19 de l'automobiliste, au moment où il commence à préparer son virage. Ainsi, même si l'automobiliste oublie de regarder dans son rétroviseur, ou si le cycliste se trouve dans un angle mort du champ de vision de l'automobiliste, rétroviseur compris, le risque que l'automobiliste ne soit pas prévenu de la présence du cycliste est fortement réduit.

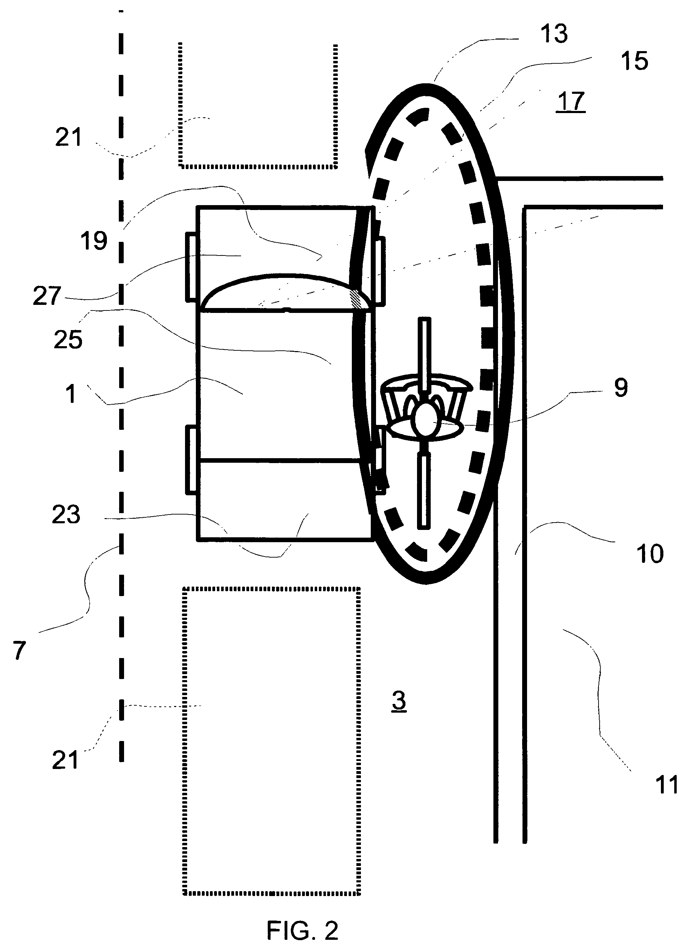

Sur la figure 2, on a représenté une situation dans laquelle l'automobile 1 et le cycliste 9 roulent très près l'un de l'autre. Cette situation peut se présenter notamment lorsque l'automobile 1 est à l'arrêt dans une file de voitures, entre deux véhicules 21. Le cycliste ne fait alors que remonter la file de voitures. Une autre situation possible est que la file de voitures avance lentement et que le cycliste roule à la même allure que les automobiles. Dans les deux circonstances envisagées, le cycliste souhaite continuer sa route en allant tout droit, tandis que l'automobiliste de la voiture 1 souhaite tourner à droite dans la voie de circulation 17.

On voit que, grâce à l'invention, l'image caractéristique 13, 15 projetée par la source de lumière vers le bas se forme non seulement sur la chaussée mais également sur la carrosserie du véhicule, à savoir sur son coffre 23, son pavillon 25 et son capot 27.

En particulier, la portion d'image caractéristique formée sur le capot 27 entre dans le champ de vision 19 de l'automobiliste souhaitant tourner à droite, et même attire son attention. Ainsi, l'automobiliste est averti de la présence du cycliste 9 à droite de son véhicule, ce qui l'invite à laisser le passage au cycliste avant de tourner.

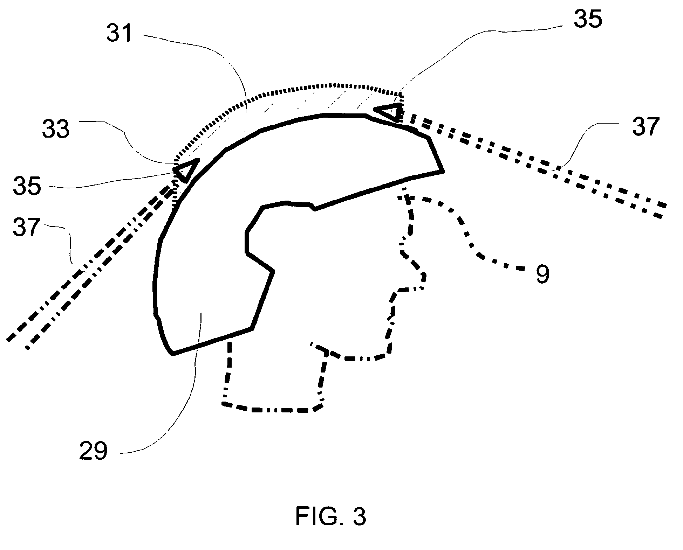

Sur la figure 3, on a représenté un casque 29 selon un mode de réalisation de l'invention. Ce casque 29 est utilisé par le cycliste 9 pour se protéger des chocs en cas d'accident et pour projeter l'image caractéristique 13, 15 autour de lui.

A cet effet, le casque 29 sert de support à une source lumineuse 31 constituée par une calotte sphérique, représentée en coupe sur la figure 3, dont les bords latéraux 33 sont équipés de sources lumineuses élémentaires 35 réparties à sa périphérie et orientées de manière à émettre des rayons lumineux 37 formant, pour chaque source lumineuse élémentaire, une image élémentaire.

L'image élémentaire projetée par chaque source de lumière élémentaire 35 peut être un trait, comme représenté sur les figures 1 et 2, ou un motif caractéristique d'un cycliste, comme par exemple la représentation symbolique d'un cycliste selon le code de la route, de manière que l'automobiliste comprenne sans hésitation que l'image caractéristique qui se forme, par juxtaposition des images élémentaires, sur la chaussée ou sur son capot signale la présence d'un cycliste à ses côtés.

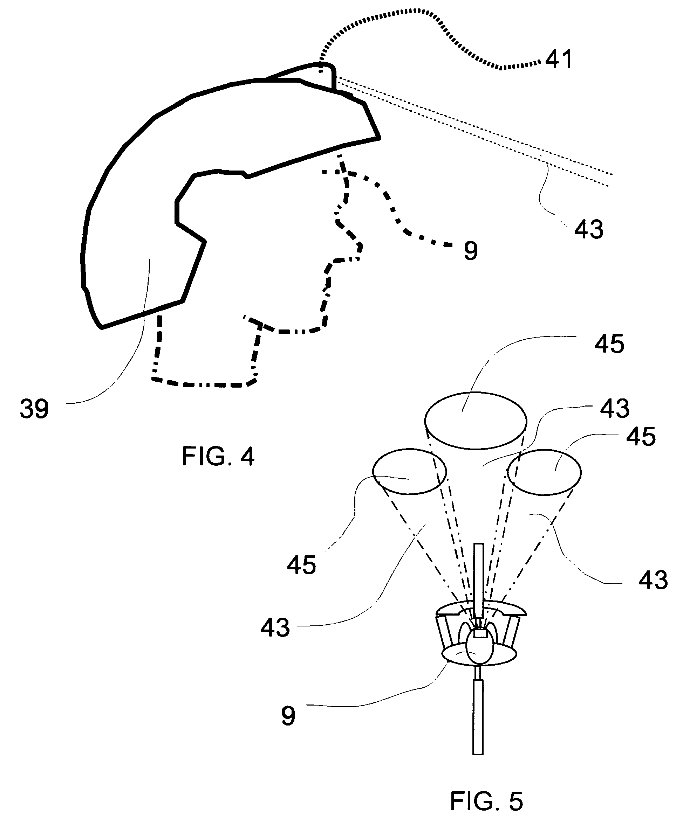

Dans le mode de réalisation de la figure 4, le casque 39 sert de support à une source lumineuse frontale 41 contenant seulement trois sources lumineuses élémentaires qui projettent, vers le bas et donc ici sur la chaussée, trois faisceaux 43 formant trois images caractéristiques 45 en avant du cycliste 9, comme on le voit sur la figure 5.

Comme précédemment décrit, les images caractéristiques 45 annoncent la présence du cycliste à un véhicule qui le précède légèrement ou le côtoie, en se formant sur la chaussée ou sur le capot du véhicule.

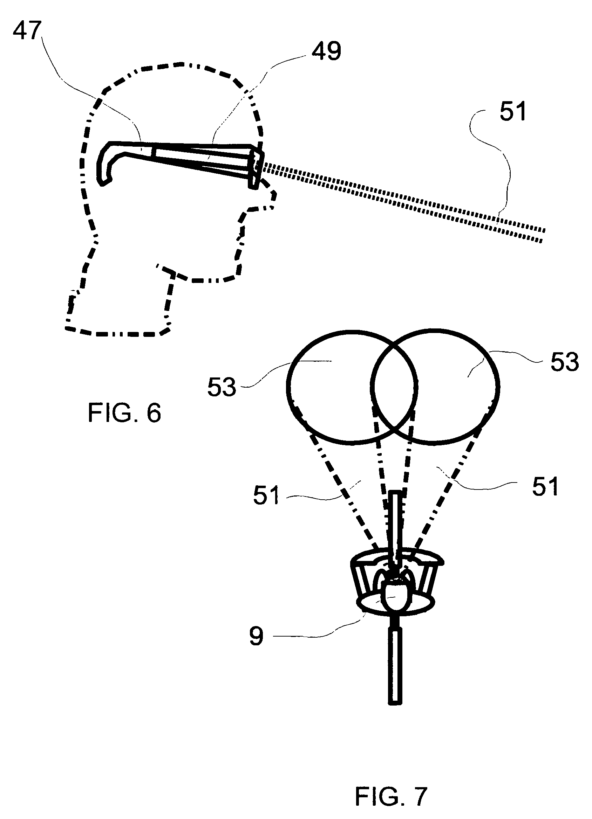

Dans le mode de réalisation de la figure 6, une paire de lunettes 47 sert de support à deux sources lumineuses élémentaires 49 portées chacune par une branche de la paire de lunettes. Chaque source lumineuse élémentaire 49 projette, vers le bas et donc ici sur la chaussée, deux faisceaux lumineux 51 formant chacun une image caractéristique élémentaire 53 en avant du cycliste 9. Les deux sources lumineuses élémentaires 49 constituent, ensemble, une source lumineuse au sens de l'invention, formant une image caractéristique elle-même constituée des deux images caractéristiques élémentaires 53.

Dans d'autres modes de réalisation non représentés, les sources lumineuses sont intégrées à un rétroviseur ou fixées sur le guidon du vélo, ou encore sur un pare-brise (ou « bulle ») s'il s'agit d'un vélo ou d'un cyclomoteur équipé d'un pare-brise. L'avantage de ces modes de réalisation est que le réglage d'assiette (inclinaison par rapport à l'horizontale) des sources lumineuses est constant, de sorte que l'image caractéristique se forme toujours à la même distance du cycliste.

Il est bien entendu que les modes de réalisation qui viennent d'être décrits ne présentent aucun caractère limitatif et qu'ils pourront recevoir toutes modifications désirables sans sortir pour cela du cadre défini par les revendications.

## Revendications

1. Dispositif de signalisation pour cyclistes (9) ou cyclomotoristes, constitué par une source lumineuse (31 ; 41 ; 49) ; **caractérisé en ce que** la source lumineuse est agencée pour, en conditions normales d'utilisation par un cycliste, projeter vers le bas une image (13, 14 ; 45 ; 53) caractéristique matérialisant la présence du cycliste (9) à une distance de sécurité de sa position réelle, et **en ce que** la source lumineuse est agencée pour qu'une portion de l'image se forme sur un capot (27) en cas de présence d'une automobile (1) roulant très près du cycliste (9).

2. Dispositif selon la revendication 1, dans lequel l'image (13, 14) caractéristique projetée délimite sur la chaussée une zone plus grande que et englobant la place réellement occupée par le cycliste, pour matérialiser la distance de sécurité que les automobiles sont censées laisser autour de lui.

3. Dispositif selon la revendication 1, dans lequel l'image (45 ; 53) caractéristique projetée occupe une zone plus petite que la place réelle du cycliste, mais se trouvant à une distance de sécurité de sa position réelle.

4. Dispositif selon l'une des revendications 1 à 3, comprenant un support qui peut être porté sur la tête par un cycliste ou un cyclomotoriste, tel qu'un casque de protection (29 ; 39), un chapeau, une casquette, ou un bandeau, ou encore une paire de lunettes (47), la source lumineuse (31 ; 41 ; 49) étant montée sur ce support (29 ; 39 ; 47).

5. Dispositif selon l'une des revendications 1 à 4, comprenant un support qui peut être monté sur le véhicule utilisé par le cycliste ou le cyclomotoriste, c'est-à-dire sur le vélo ou le cyclomoteur, la source lumineuse (31 ; 41 ; 49) étant montée sur ce support

6. Dispositif selon la revendication 5, dans lequel le support est fixé sur un guidon ou sur un rétroviseur ou sur un pare-brise.

## Patentansprüche

1. Signalgeber für Radfahrer (9) oder Mopedfahrer, mit einer Lichtquelle (31, 41, 49), **dadurch gekennzeichnet, dass** die Lichtquelle angeordnet ist, bei normalem Gebrauch von einem Radfahrer, zu projizieren ein charakteristisches Bild (13, 14, 45, 53) die stellt die Anwesenheit des Fahrers (9) in einem sicheren Abstand von seiner tatsächlichen Position und dass die Lichtquelle so angeordnet ist, dass ein Teil des Bildes auf einer Motorhaube erscheint, bei einem Automobil läuft in der Nähe der Radfahrer oder Mopedfahrer.

2. Vorrichtung nach Anspruch 1, wobei das Bild (13, 14) auf dem Boden projektiert begrenzt einen Raum Größer und umfassend die tatsächlich Wohnraum der Radfahrer, um den Sicherheitsabstand, dass Autos werden voraussichtlich um es verlassen, zu materialisieren.

3. Vorrichtung nach Anspruch 1, wobei das projizierte charakteristische Bild (45, 53) befindet sich in einem kleineren Raum als die tatsächliche Fläche des Radfahrers, aber in einem sicheren Abstand von seinem aktuellen Standort.

4. Vorrichtung nach einem der Ansprüche 1 bis 3, wobei die Lichtquelle (31, 41 , 49) auf einem Träger (29, 39, 47), die auf den Kopf eines Radfahrers oder Mopedfahrer getragen werden kann, angebracht ist, wie einem Helm (29, 39), einem Hut, einem Kappe oder Stirnband, oder einem Brille (47).

5. Vorrichtung nach einem der Ansprüche 1 bis 4, umfassend einen Halter, der an dem Fahrzeug angebracht werden kann.

6. Vorrichtung nach Anspruch 5, wobei der Träger an einer Lenkstange oder einem Spiegel oder einer Windschutzscheibe befestigt ist.

## Claims

1. Signaling device for cyclists (9) or moped riders, comprising a light source (31, 41, 49), **characterized in that** the light source is arranged to, in normal use by a cyclist, project down a characteristic image (13, 14, 45, 53) embodying the presence of the cyclist (9) at a safe distance from his actual location and **in that** the light source is so arranged that a part of the image appears on a bonnet is case an automobile runs close to the cyclist or moped rider.

2. Device according to claim 1, wherein the projected characteristic image (13, 14) defines on the floor a space greater than and encompassing the area actually occupied by the cyclist, to materialize the safety distance that automobiles are expected to leave around it.

3. Device according to claim 1, wherein the projected characteristic image (45, 53) occupies a smaller space than the actual area of the cyclist, but being at a safe distance from his actual location.

4. Device according to one of claims 1 to 3, comprising a support (29, 39, 47) which can be worn on the head by a cyclist or moped rider, such as a helmet (29, 39), a hat, a cap, or headband, or a pair of glasses (47), and wherein the light source (31, 41, 49) is mounted on said support.

5. Device according to one of claims 1 to 4, comprising a holder which can be mounted on the vehicle used by the cyclist or moped, that is to say on the bicycle or moped.

6. Device according to claim 5, wherein the support is fixed to a handlebar or a mirror or a Windshield.
